**Europäisches Patentamt**

**European Patent Office**

**Office européen des brevets**

(19)

(11) Publication number: **0 127 686**

**A1**

(12) **EUROPEAN PATENT APPLICATION**

published in accordance with Art. 158(3) EPC

(21) Application number: **83903826.2**

(22) Date of filing: **06.12.83**

Data of the international application taken as a basis:

(86) International application number:
PCT/JP83/00429

(87) International publication number:
WO84/02256 (21.06.84 84/15)

(51) Int. Cl.³: **A 23 G 9/02**
**A 23 G 9/04, A 23 G 9/20**

(30) Priority: 06.12.82 JP 213726/82
26.04.83 JP 73577/83
28.04.83 JP 75167/83
17.06.83 JP 109734/83

(43) Date of publication of application:
**12.12.84 Bulletin 84/50**

(84) Designated Contracting States:
**DE FR GB**

(71) Applicant: **OTSUKA CHEMICAL CO., LTD.**
**10 Bungo-machi, Higashi-ku**
**Osaka-shi, Osaka 540(JP)**

(72) Inventor: **OZAKI, Atsuko 2-1, Kokuwajima**
**Aza-Maehama**
**Muya-cho**
**Naruto-shi Tokushima 772(JP)**

(72) Inventor: **HIRAO, Kazuko**
**11-11, Oodera Aza-Hirai Itano-cho**
**Itano-gun Tokushima 779-01(JP)**

(74) Representative: **Türk, Dietmar, Dr. rer. nat. et al,**
**Redies, Redies, Türk & Gille Patentanwälte**
**Brucknerstrasse 20**
**D-4000 Düsseldorf 13(DE)**

(54) **HALF-FROZEN BEVERAGE AND PROCESS FOR ITS PREPARATION.**

(57) A half-frozen beverage prepared by adding an aqueous liquid to an ice crystal composition composed of water and 10 to 65 wt%, based on water, of one or more sugars and/or sugar alcohols. This beverage has a sherbet-like touch of ice, is refershing and can be domestically prepared with ease.

EP 0 127 686 A1

DESCRIPTION

HALF-FROZEN BEVERAGE AND PROCESS FOR ITS PREPARATION

TECHNICAL FIELD

The present invention relates to a composition for controlling ice crystal formation, a half-frozen beverage containing the composition and a process for its preparation.  Since a half-frozen beverage has a sherbet-like touch of ice and is refreshing, it is different from ordinary beverages and ices such as ice cream and sherbet, and is very popular beverages.

However, a special equipment is necessary for preparing the half-frozen beverage and, therefore, half-frozen beverages hitherto have been only sold under a name of Slush or Shake at a fast food store such as the McDonald's or Mossburger.

In conventional ice foods, for the purpose that a spoon can dip in smoothly, there have been known examples that not less than 30 % (% by weight, hereinafter the same), based on water, of glucose is used (Japanese Unexamined Patent Publication No. 23850/1981) and not more than 29 % of glucose and 1 to 12 % of glycerin are used (Japanese Unexamined Patent Publication No. 23851/1981).

However, according to these examples, a spoon dips in smoothly, but they melt quickly when eating and have poor sherbet-like touch.

The present inventors have intensively made progress in our studies to develop a half-frozen beverage which can be prepared with ease, and got to a completion of the present invention.

DISCLOSURE OF INVENTION

The present invention relates to a composition for controlling ice crystal formation composed of 10 to 65 %, based on water, of one or more sugars and/or sugar alcohols, a half-frozen beverage prepared by adding an aqueous liquid to the composition and a process for its preparation.

Sugars to be used are, for instance, glucose, sucrose, isomerized sugar, inverted sugar, fructose, thick malt syrup, malt sugar, lactose, and the like, and glucose is preferably used.

Sugar alcohols to be used are, for instance, sorbitol, maltitol, and a reduced starch hydrolysate, and the like.

A total amount of sugars or sugar alcohols is preferably 10 to 65 %, based on water, and when it is not more than the lower limit of 10 %, the half-frozen beverage becomes hard when frozen, and it is not preferable as an ice food and not good taste. On the other hand, when the total amount of sugars or sugar alcohols is not less than the upper limit of 65 %, the sherbet-like touch is not remained when frozen, and it is too sweet and not good taste.

Moreover, in case of using glucose as sugars, 10 to 45 % of glucose or 10 to 45 % of glucose plus 3 to 20 % of more than one other sugars or sugar alcohols are preferably employed, based on water.

Fruit juice, acidulants or flavorings are chosen arbitrary according to one's taste, and luxuries such as cocoa and coffee are chosen.

The composition for controlling ice crystal formation of the present invention, with or without adding arbitrary fruit juice, acidulants, flavorings, stabilizers, and the like, is frozen to be capable for providing ice foods such as sherbet. Also, preferable half-frozen beverages keeping a sherbet-like touch can be obtained by adding milk, soda water, soya milk, and the like to the above frozen composition. Moreover, a delicious dessert can be easily prepared by blending the composition with yogurt, ice cream, and the like.

A process for preparing a half-frozen beverage of the present invention comprises the first process in which a composition composed of 10 to 65 %, based on water, of one or more sugars and/or sugar alcohols (ice crystal composition, hereinafter the same) is prepared, the second process in which the prepared composition is injected into a package, sealed hermetically and pasteurized by heating, the third process in which the pasteurized composition is frozen in the package for more than 2 hours at -5 to $-25^{\circ}$C, and the forth process in which the composition frozen in the package is poured into a glass and the like, followed by blending it with an aqueous liquid.

In the above process, fruit juice, acidulants, flavorings, luxuries or stabilizers are added in the first process.

In the second process, on injecting the prepared composition into a package, a package made of various materials, excluding glass, such as plastics, paper and metal can be used. Among them, so-called a retort pouch that is made by forming a plastic film, a metal foil or a multilayered material using them into a bag shape or other shape is pasteurized at more than $100^{\circ}$C, if it is a thin laminate. In stead of pasteurizing after injecting the composition into a package, the composition may be pasteurized by means of a plate heater before injecting, followed by charging the composition under a germ-free condition.

In the third process, on freezing the composition injected into the package, it is frozen in the package for more than two hours at -5 to $-25^{\circ}$C, prefrably -12 to $-18^{\circ}$C. Nowadays, there are a freezer attached to a refrigerator and an individual refrigerator as household freezers, and because a temperature in every freezer is -12 to $-18^{\circ}$C, the composition can be frozen to a suitable hardness even at home. Although the composition is also frozen at -5 to $-12^{\circ}$C (a temperature in an ice box of a refrigerator), a sherbet-like touch is reduced and it is short of refreshing because it is soft and ice remains in a little amount when it is blended with an aqueous liquid. On the other hand, when it is frozen at -18 to $-25^{\circ}$ (a temperature in a refrigerator for business use), it becomes somewhat difficult to blend it with an aqueous liquid because it becomes a little harder, but a sherbet-like touch is enhanced and it becomes more refreshing. A freezing time is largely changed by various conditions such as an amount of the foods in the freezer, a place to be put in the freezer and a frequency of opening and closing the door of the freezer, and it sometimes takes not less than 24 hours, but when a cooling efficiency is good, it takes about 2 hours to freeze.

In the fouth process, on pouring the frozen composition into a glass and blending with an aqueous liquid, there can be used milk, soya milk, carbonated water, water, other various kinds of drinks, and the like as the aqueous liquid. The aqueous liquid is blended in 50 to 200 %, more preferably 70 to 140 %, based on the frozen composition. When the blended amount is not more than 70 %, it becomes hard to drink with a straw. When the blended amount exceeds 140 %, ice particles scarcely remain so that it feels less refreshing.

When the aqueous liquid is carbonated water, stimulus due to carbon dioxide gas is added to a sherbet-like touch of ice and it becomes extremely refreshing. When the aqueous liquid is water, it can be easily prepared, and in case of a half-frozen beverage, various kinds of tastes rich in variety according to a taste of the beverage can be made up. When the aqueous liquid is milk or soya milk, it becomes a mild taste similar to that of an ice cream, and is preferable from the viewpoint of nutrition.

However, when milk is added to a frozen acidic composition suplimented with a fruit juice and/or an acid, there have been occurred defects that it becomes poor-looking because proteins in milk are coagulated and adhered to a wall of the glass and that it is separated in a short time (within 10 minutes) because the lower layer is turned into a transparent syrup and the coagulated stuff is further agglomerated in the upper layer to form like slurry.

The present inventors have intensively made progress in our studies on an acidic composition in which the coagulated stuff is not prominent and the separation is not occurred in a short time even after adding a proteinous material such as milk or soya milk (hereinafter referred to as "milks") to the frozen composition, and as the results, succeeded in making the coagulated stuff not prominent and also in delaying the separation of the coagulated stuff drastically even after adding milks to the frozen acidic composition, by adding and blending high methoxylpectin as a stabilizer to the acidic composition to give an amount of the high methoxylpectin of 0.1 to 2 %, preferably 0.4 to 1 % in the acidic composition after blending.

That is, the present invention also relates to a half-frozen beverage prepared by adding a proteinous material to a frozen acidic composition to which is added and blended high methoxylpectin whose content is ranging from 0.1 to 2 %, preferably from 0.4 to 1 %.

It is necessary that a stabilizer for preparing a half-frozen beverage by adding milks to the frozen acidic composition satisfies the following requirements. That is,

(a) A sherbet-like touch of ice in the frozen acidic composition is maintained.

(b) Viscosity is not too high.

(c) Coagulation of proteins is prevented or reduced when milks are added to the frozen acidic composition.

(d) It does not react with calcium ion contained in milks.

(e) It does not have a deleterious effect on its flavor.

In the above context, high methoxylpectin, carrageenan, gelatin, pectin, locust bean gum, guar gum, starch and its hydrolysed material, and the like were tested as a stabilizer of a half-frozen beverage, and as a result, only high methoxylpectin satisfied the above described requirements necessary for a stabilizer. It is necessary that a content of high methoxylpectin is 0.1 to 2 %. When the content of high methoxylpectin is not more than 0.1 %, in case of adding milks into unfrozen acidic composition, separation does not take place even after leaving it in prolonged period, but in case of a frozen acidic syrup, separation takes place within ten minutes. In particular, separation takes place rapidly in milk having a high content of milk solids-not-fat such as low fat milk or reconstituted milk enriched with milk constituents.  On the other hand, when the content of high methoxylpectin exceeds 2 %, viscosity of the frozen acidic composition becomes too high and sherbet-like touch of ice disappears, and it is difficult to blend it with milks.

Although the reason why high methoxylpectin exerts the effect of delaying the separation of a half-frozen beverage is ambiguous, it may be inferred as follows:

(a) Difference in coagulation state due to an added amount of high methoxylpectin within 0.1 to 2.0 % is not observed by naked eye, while in case of no addition, coagulated materials adhering to a glass is prominent and coagulation is evidently significant.  From that fact, high methoxylpection can be thought not to have an effect to prevent the coagulation completely, but to have an effect to reduce it.

(b) Considering from the fact that when the acidic composition is not frozen, separation does not take place, and when the acidic composition is frozen, separation is observed, it is likely that the separation takes place as a result that coagulated materials are afloat together with ice particles.  The reason why separation is delayed with an increase of an added amount of high methoxylpectin can be thought to depend on a decrease of coagulation, but a viscosity of pectin may also have an effect.

On the other hand, methods for making ice foods refreshing by adding carbon dioxide gas are known, and there can be exemplified, for instance, Japanese Examined Patent Publication Nos. 19/1972, 6788/1973, 5388/1978 and the like.  However, in those methods, since gas pressure is as high as more than 1.0 $kg/cm^2$ at $15^O$C, there are demerits, for instance, that the contents are prone to rush out when the package is opened, and the like.

As the results of present inventors' intensive studies, the present inventors have found that a composition for controlling ice crystal formation is obtained, that a softness is further improved than conventional when frozen, a spoon dips in smoothly, and a sherbet-like touch of ice can be maintained and an excellent refreshment is kept, by combining sugars and/or sugar alcohols and carbon dioxide gas of a very low gas pressure compared with conventional examples.

That is, the present invention relates to a composition for controlling ice crystal formation prepared by dissolving carbon dioxide gas under an elevated pressure into a composition composed of 10 to 65 % by weight based on water of one or more sugars and/or sugar alcohols to give a gas pressure at $15^O$C of 0.2 to 0.9 $kg/cm^2$.

For the purpose of dissolving carbon dioxide gas into a composition of the present invention under an elevated pressure, there are the postmix manner in which a condensed liquid of the composition of the present invention except carbon dioxide gas is added in a package, carbonated water is injected so that a gas pressure at $15^O$C is finally 0.2 to 0.9 $kg/cm^2$, sealing the package hermetically, and then, shaking to blend, and the premix manner in which after injecting carbon dioxide gas under an elevated pressure into the composition of the present invention except carbon dioxide gas, the composition is added in a package, and sealed the package hermetically.  Since there are some demerits that the effect of carbon dioxide gas diminishes when the gas pressure is not more than 0.2 $kg/cm^2$, and on the contrary that the contents are prone to rush out on opening the package when the gas pressure is not less than 0.9 $kg/cm^2$, 0.2 $kg/cm^2$ to 0.9 $kg/cm^2$ is preferred.

Hereinafter, the composition of the present invention is explained by means of Examples and Comparative Examples.

Example 1

25 g of glucose, 9 g of sucrose, 9 g of orange juice, 0.6 g of citric acid, 0.3 g of orange essence and 1 g of a stabilizer were dissolved in water to give a total weight of 165 g. This mixture was injected into a package, pasteurized at 95°C for 4 minutes, and then, cooled and placed in a freezer to freeze at -20°C (20 % of glucose, and 7 % of sucrose, based on water).

Example 2

14 g of gluxose, 7 g of fructose, 9 g of orange juice, 0.6 g citric acid, 0.3 g of orange essence and 1 g of a stabilizer were dissolved in water to give a total weight of 165 g, and then, processed to freeze in the same manner as Example 1 (10 % of glucose, 5 % of fructose, based on water).

Example 3

33 g of glucose, 16 g of isomerized sugar, 9 g of grapefruit juice, 0.6 g of citric acid, 0.3 g of grapefruit essence and 1 g of stabilizer were dissolved in water to give a total weight of 165 g, and then, processed to freeze in the same manner as Example 1 (29 % of glucose, 15 % of isomerized sugar, based on water).

Example 4

25 g of glucose and 9 g of solbitol powder were used, and then, processed to freeze in the same manner as Example 1 (20 % of glucose, 7 % of solbitol powder, based on water).

Example 5

25 g of glucose, 5 g of sucrose and 4 g of sorbitol powder were used, and then, processed to freeze in the same manner as Example 1 (20 % of glucose, 3.9 % of sucrose, 3.1 % of fructose, based on water).

Example 6

25 g of glucose, 5 g of sucrose and 4 g of fructose were used, and then, processed to freeze in the same manner as Example 1 (20 % of glucose, 3.9 % of sucrose, 3.1 % of fructose, based on water).

Example 7

25 g of glucose, 4 g of sorbitol powder and 4 g of maltitol powder were used, and then, processed to freeze in the same manner as Example 1 (20 % of glucose, 3.1 % of sorbitol powder, 3.1 % of maltitol powder, based on water).

Comparative Example 1

41 g of glucose, 9 g of orange juice, 0.6 g of citric acid, 0.3 g of orange essence and 1 g of a stabilizer were dissolved in water to give a total amount of 165 g, and then, processed to freeze in the same manner as Example 1 (35 % of glucose, based on water).

Comparative Example 2

45.5 g of glucose, 22.5 g of sucrose, 9 g of orange juice, 1 g of citric acid, 0.3 g of orange essence and 1 g of a stabilizer were dissolved in water to give a total amount of 165 g, and then, processed to freeze in the same manner as Example 1 (50 % of glucose, 25 % of sucrose, based on water).

Comparative Example 3

7.5 g of glucose, 4.5 g of fructose, 9 g of grape juice, 1 g of citric acid, 0.3 g of grape essence and 1 g of a stabilizer were dissolved in water to give a total amount of 165 g, and then, processed to freeze in the same manner as Example 1 (5 % of glucose, 3 % of fructose, based on water).

With respect to the frozen materials obtained in Examples 1 to 7 and Comparative Examples 1 to 3, smoothness of dipping a spoon in the frozen material and sherbet-like touch when the equal amount of milk was added to the frozen material were tested. The results are shown in Table 1.

Table 1

|  | Smoothness of dipping a spoon in the frozen material | Sherbet-like touch when the equal amount of milk was added to the frozen material |
|---|---|---|
| Ex. 1 | good | yes |
| Ex. 2 | a little | yes |
| Ex. 3 | good | slight |
| Ex. 4 | good | yes |
| Ex. 5 | good | yes |
| Ex. 6 | good | yes |
| Ex. 7 | good | yes |
| Com. Ex.1 | good | no |
| Com. Ex.2 | good | no |
| Com. Ex.3 | no good | yes |

Example 8

18.3 g of glucose, 9 g of orange juice, 0.6 g of citric acid, 0.3 g of orange essence and 0.7 g of high methoxylpectin were dissolved in water to give a total weight of 165 g, injected into a retort pouch (130 x 170 mm) consisting of 3 layers of polyester, alminum foil and polyolefin, sealed hermetically and pasteurized at 95°C for 4 minutes. Then, it was sealed along the center to divide into two halves, and the mixture was frozen for 4 hours in the retort pouch in a freezer (temperature control: about -18°C) of a household refrigerator provided with a freezer. The frozen retort pouch was devided at the seal along the center, one halr was poured into a glass, and 80 mℓ of milk was added and blended to give a half-frozen beverage.

Example 9

A half-frozen beverage was prepared in the same manner as Example 8 except that 47.6 g of glucose, 9 g of grape juice, 0.6 g of citric acid, 0.3 g of grape essence and and 1.2 g of high methoxylpectin were used as ingredients and that 100 mℓ of soya milk was used as an aqueous liquid.

Example 10

A half-frozen beverage was prepared in the same manner as Example 8 except that 31.6 g of glucose, 9 g of strawberry juice, 0.6 g of citric acid, 0.3 g of strawberry essence and 1.7 g of high methoxylpectin were used as ingredients and that 120 mℓ of carbonated water was used as an aqueous liquid.

Example 11

A half-frozen beverage was prepared in the same manner as Example 8 except that 41.9 g of glucose, 3 g of instant coffee and 0.2 g of coffee flavor were used as ingredients, that 80 mℓ of milk was used as an aqueous liquid, and that pasteurization was carried out at 120°C for 15 minutes.

Example 12

A half-frozen beverage was prepared in the same manner as Example 8 except that 17.5 g of glucose, 6.7 g of sorbitol powder, 9 g of orange juice, 0.6 g of citiric acid, 0.3 g of orange essence and 0.7 g of high methoxylpectin were used as ingredients and that 100 mℓ of soya milk was used as an aqueous liquid.

Example 13

A half-frozen beverage was prepared in the same manner as Example 8 except that 42.3 g of glucose, 17.7 g of sucrose, 9 g of grape juice, 0.6 g of citric acid, 0.3 g of grape essence and 1.2 g of high methoxylpectin were used as ingredients and that 120 mℓ of carbonated water was used as an aqueous liquid.

Example 14

A half-frozen beverage was prepared in the same manner as Example 8 except that 15.7 g of glucose, 21.7 g of sucrose, 9 g of strawberry juice, 0.6 g of citric acid, 0.3 g of strawberry essence and 1.7 g of high methoxylpectin were used as ingredients and that 80 mℓ of milk was used as an aqueous liquid.

Example 15

A half-frozen beverage was prepared in the same manner as Example 11 except that 47.0 g of glucose, 5.4 g of fructose, 3 g of instant coffee and 0.2 g of coffee flavor were used as ingredients and that 100 mℓ of soya milk was used as an aqueous liquid.

Example 16

A half-frozen beverage was prepared in the same manner as Example 11 except that 29.5 g of glucose, 14.2 g of sucrose and 3 g of cocoa were used as ingredients and that 120 mℓ of soya milk was used as an aqueous liquid.

Comparative Example 4

A half-frozen beverage was prepared in the same manner as Example 8 except that 31.8 g of glucose, 9 g of orange juice, 0.6 g of citric acid, 0.3 g of orange essence and 0.7 g of high methoxylpectin were used as ingredients and that 40 mℓ of milk was used as an aqueous liquid.

Comparative Example 5

A half-frozen beverage was prepared in the same manner as Example 8 except that 31.8 g of glucose, 9 g of grape juice, 0.6 g of citric acid, 0.2 g of grape essence and 0.7 g of high methoxylpectin were used as ingredients and that 160 mℓ of soya milk was used as an aqueous liquid.

Comparative Example 6

A half-frozen beverage was prepared in the same manner as Example 8 except that 28.9 g of glucose, 13.9 g of sucrose, 9 g of strawberry juice, 0.6 g of citric acid, 0.3 g of strawberry essence and 1.2 g of high methoxylpectin were used as ingredients and that 160 mℓ of carbonated water was used as an aqueous liquid.

Comparative Example 7

A half-frozen beverage was prepared in the same manner as Example 8 except that 28.9 g of glucose, 13.9 g

- 13 -    C127686

of sucrose, 9 g of orange juice, 0.6 g of citric acid, 0.3 g of orange essence and 1.2 g of high methoxylpectin were used as ingredients and that 160 mℓ of milk was used as an aqueous liquid.

Comparative Example 8

A half-frozen beverage was prepared in the same manner as Example 8 except that 10.3 g of glucose, 9 g of grape juice, 0.6 g of citric acid, 0.3 g of grape essence and 1.7 g of high methoxylpectin were used as ingredients and that 80 mℓ of soya milk was used as an aqueous liquid.

Comparative Example 9

A half-frozen beverage was prepared in the same manner as Example 11 except that 52.4 g of glucose, 3 g of instant coffee and 0.2 g of coffee flavor were used as ingredients and that 100 mℓ of carbonated water was used as an aqueous liquid.

Comparative Example 10

One half of the two halves of the pasteurized retort pouch package of Example 8 were pourd into a glass as is liquid state before freezing, and blended with 80 mℓ of milk.

Comparative Example 11

The mixture supplimented with milk obtained in Comparative Example 10 was added into an ice container and frozen under the same condition as that in Example 8.

With respect to the frozen compositions obtained in Examples 8 to 16 and Comparative Examples 4 to 11, smoothness of dipping a spoon in the frozen composition, form of the half-frozen beverage, sherbet-like touch of ice and feasibility of drinking with a straw were tested. The results are shown in Table 2.

Table 2

| | Smoothness of passing a spoon in the frozen composition | Form | Sherbet-like touch of ice | Drinking with a straw |
|---|---|---|---|---|
| Ex. 8 | good | half-frozen beverage | yes | feasible |
| Ex. 9 | " | " | " | " |
| Ex. 10 | " | " | " | " |
| Ex. 11 | " | " | " | " |
| Ex. 12 | " | " | " | " |
| Ex. 13 | " | " | " | " |
| Ex. 14 | " | " | " | " |
| Ex. 15 | " | " | " | " |
| Ex. 16 | " | " | " | " |

0127686

| | Smoothness of passing a spoon in the frozen composition | Form | Sherbet-like touch of ice | Drinking with a straw |
|---|---|---|---|---|
| Com. Ex. 4 | good | half-frozen beverage | yes | not feasible |
| Com. Ex. 5 | " | " | no | feasible |
| Com. Ex. 6 | " | " | " | " |
| Com. Ex. 7 | " | " | " | " |
| Com. Ex. 8 | no good | " | yes | " |
| Com. Ex. 9 | good | " | no | " |
| Com. Ex. 10 | - | ordinary beverage | no | feasible |
| Com. Ex. 11 | no good | sherbet form | yes | not feasible |

Example 17

25 g of glucose, 9 g of sucrose, 9 g of orange juice, 0.6 g of citric acid, 0.3 g of orange essence and 0.7 g of high methoxylpectin were dissolved in water to give a total weight of 165 g, injected into a package and pasteurized at 95$^O$C for 4 minutes, and then, cooled and placed in a freezer to freeze at -18$^O$C to give a frozen acidic syrup (0.4 % of high methoxylpectin, to the total weight). Then, the frozen acidic syrup was blended with an equal weight of milk and stirred with a spoon to give a half-frozen beverage.

Example 18

25 g of glucose, 9 g of sucrose, 9 g of orange juice, 0.6 g of citric acid, 0.3 g of orange essence and 1.2 g of high methoxylpectin were dissolved in water to give a total weight of 165 g, injected into a package and pasteurized at 95$^O$C for 4 minutes, and then, cooled and placed in a freezer to freeze at -18$^O$C to give a frozen acidic surup ( 0.7 % of high methoxylpectin, to the total weight). Then, the frozen acidic syrup was blended with an equal weight of milk and stirred with a spoon to give a half-frozen beverage.

Example 19

25 g of glucose, 9 g of sucrose, 9 g of orange juice, 0.6 g of citric acid, 0.3 g of orange essence and 1.7 g of high methoxylpectin were dissolved in water to give a total weight of 165 g, injected into a package and pasteurized at 95$^O$C for 4 minutes, and then, and cooled and placed in a freezer to freeze at -18$^O$C to give a frozen acidic syrup (1.0 % of high methoxylpectin, to the total weight). Then, the frozen acidic syrup was blended with an equal weight of milk and stirred with a spoon to give a half-frozen beverage.

Comparative Example 12

25 g of glucose, 9 g of sucrose, 9 g of orange juice, 0.6 g of citric acid and 0.3 g of orange essence were dissolved in water to give a total weight of 165 g, injected into a package and pastuerized at 95$^O$C for 4

minutes, and then cooled and placed in a freezer to freeze at $-18^{\circ}C$ to give a frozen acidic syrup ( no addition of high methoxylpectin). Then, the frozen acidic syrup was blended with an equal weight of milk and stirred with a spoon to give a half-frozen beverage.

Comparative Example 13

25 g of glucose, 9 g of sucrose, 9 g of orange juice, 0.6 g of citric acid, 0.3 g of orange essence and 0.1 g of high methoxylpectin were dissolved in water to give a total weight of 165 g, injected into a package and pasteurized at $95^{\circ}C$ for 4 minutes, and then, cooled and placed in a freezer to freeze at $-18^{\circ}C$ to give a frozen acidic syrup (0.05 % of high methoxylpecin, to the total weight). Then, the frozen acidic syrup was blended with an equal weight of milk to give make a half-frozen beverage.

Comparative Example 14

25 g of glucose, 9 g of sucrose, 9 g of orange juice, 0.6 g of citric acid, 0.3 g of orange essence and 4.1 g of high methoxylpectin were dissolved in water to give a total weight of 165 g, injected into a package and pasteurized at $95^{\circ}C$ for 4 minutes, and then, cooled and placed in a freezer to freeze at $-18^{\circ}C$ to give a frozen acidic syrup ( 2.5 % of high methoxylpecin, to the total weight). Then, the frozen acidic syrup was blended with an equal weight of milk to give a half-frozen beverage.

Then, with respect to the frozen acidic syrup obtained in the above-mentioned Examples 17 to 19 and Comparative Examples 12 to 14, sherbet-like touch of ice, and prominence of coagulated materials and time required for the separation when a half-frozen beverage was prepared by adding an equal amount of milk were tested.

The results are shown in Table 3. In Table 3, +++, ++ and +, and ※※※ , ※※ and ※ represent following evaluations, respectively.

+ : no sherbet-like touch

++ : a slight sherbet-like touch left

0127686

+++ : sherbet-like touch

※ : coagulated materials are not prominent

※※ : coagulated materials are slightly prominent

※※※ : coagulated materials are prominent

Table 3

| | Sherbet-like touch of ice of the frozen acidic syrup | Prominence of coagulated materials when half-frozen beverage was prepared by adding an equal amount of milk | Time required for separation (minutes) | |
| --- | --- | --- | --- | --- |
| | | | ordinary milk (milk fat 3.2 % milk solids-not-fat 8.2 %) | low fat milk (milk fat 1.5 % milk solids-not-fat 10.0 %) |
| Ex. 17 | +++ | ※ | 30 | 15 |
| Ex. 18 | +++ | ※ | 60 | 20 |
| Ex. 19 | +++ | ※ | 120 | 40 |
| Com. Ex. 12 | +++ | ※※※※ | 6 | 3 |
| Com. Ex. 13 | +++ | ※※※ | 8 | 5 |
| Com. Ex. 14 | + | ※ | more than 360 min. (Test was terminated up to 360 min.) | 90 |

0127686

Example 20

43 g of glucose, 2.2 g of strawberry juice, 0.9 g of high methoxylpectin, 0.7 g of citric acid, 0.1 g of sodium citrate, 0.4 g of a coloring agent, 0.4 g of strawberry essence were dissolved in water to give a volume of syrup of 98 m$\ell$, cooled and injected into a package. Then, 62 m$\ell$ of carbonated water, in which the gas pressure at 15$^{O}$C was adjusted to be 3.4 kg/cm$^2$ was cooled to 5$^{O}$C, and then,· injected to the above-mentioned package containing the syrup. After sealing the package hermetically, the package was shaken to mix the syrup with the carbonated water, pasteurized at 65$^{O}$C for 30 minutes, cooled, and then, placed in a freezer to freeze at -18$^{O}$C ( 0.7 kg/cm$^2$ of gas pressure at 15$^{O}$C, 33 % of glucose based on water).

Example 21

A frozen composition was prepared in the same manner as Example 20 except that the volume of the syrup was 108 m$\ell$ by adding water and that 52 m$\ell$ of the carbonated water used in Example 20 was injected ( 0.4 kg/cm$^2$ of gas pressure at 15$^{O}$C, 33 % of glucose based on water).

Example 22

A frozen composition was prepared in the same manner as Example 20 except that 28 g of glucose, and 10 g of sucrose were used instead of 43 g of glucose (0.7 kg/cm$^2$ of gas pressure at 15$^{O}$C, 21 % of glucose, 8 % of sucrose based on water).

Example 23

A frozen composition was prepared in the same manner as Example 22 except that the volume of the syrup was 108 m$\ell$ by adding water and that 52 m$\ell$ of the carbonated water used in Example 20 was injected ( 0.4 kg/cm$^2$ of gas pressure at 15$^{O}$C, 21 % of glucose, 8 % of sucrose based on water).

Example 24

A frozen composition was prepared in the same manner as Example 20 except that 30 g of sucrose was used instead of 43 g of glucose (0.7 kg/cm$^2$ of gas pressure at 15$^{\circ}$C, 22 % of sucrose based on water).

Example 25

A frozen composition was prepared in the same manner as Example 24 except that the volume of the syrup was 108 mℓ by adding water and that 52 mℓ of the carbonated water used in Example 20 was injected (0.4 kg/cm$^2$ of gas pressure at 15 $^{\circ}$C, 22 % of sucrose based on water).

Example 26

A frozen composition was prepared in the same manner as Example 20 except that 35 g of glucose, 8 g of sorbitol powder were used instead of 43 g of glucose (0.7 kg/cm$^2$ of gas pressure at 15$^{\circ}$C, 27 % of glucose, 6 % of sorbitol powder based on water).

Example 27

A frozen composition was prepared in the same manner as Example 20 except that 20 g of glucose, 10 g of sucrose  and 8 g of maltitol powder were used instead of 43 g of glucose (0.7kg/cm$^2$ of gas pressure at 15$^{\circ}$C, 15 % of glucose, 8 % of sucrose, 6 % of maltitol powder based on water).

Comparative Example 15

A frozen composition was prepared in the same manner as Example 20 except that the volume of the syrup was 160 mℓ and that carbonated water was not injected (no addition of carbon dioxide gas, 33 % of glucose based on water).

Comparative Example 16

A frozen composition was prepared in the same manner as Comparative Example 15 except that 28 g of glucose, 10 g of sucrose were used instead of 43 g of glucose (no addition of carbon dioxide gas, and 21 % of glucose, 8 % of sucrose based on water).

Comparative Example 17

A frozen composition was prepared in the same manner as Comparative Example 15 except that 30 g of sucrose was used instead of 43 g of glucose (no addition of carbon dioxide gas, 22 % of surcose based on water).

The obtained results are summarized and shown in Table 4.

Table 4

| | Gas pressure of carbon dioxide at 15°C $(kg/cm^2)$ | Smoothness of dipping a spoon in the frozen composition | Feeling of refreshing of the frozen composition | Sherbet-like touch of ice when adding an equal amount of milk to the frozen composition |
|---|---|---|---|---|
| Ex. 20 | 0.7 | +++++++ | +++ | + |
| Ex. 21 | 0.4 | ++++++ | ++ | + |
| Ex. 22 | 0.7 | +++++++ | +++ | ++ |
| Ex. 23 | 0.4 | +++++ | ++ | ++ |
| Ex. 24 | 0.7 | ++++++ | +++ | +++ |
| Ex. 25 | 0.4 | ++++ | ++ | +++ |
| Ex. 26 | 0.7 | ++++++++ | +++ | + |
| Ex. 27 | 0.7 | +++++++ | +++ | ++ |
| Com. Ex. 15 | 0 | +++ | + | + |
| Com. Ex. 16 | 0 | ++ | + | ++ |
| Com. Ex. 17 | 0 | + | + | +++ |

0127686

CLAIMS

1. A composition for controlling ice crystal formation composed of 10 to 65 % by weight based on water of one or more sugars and/or sugar alcohols.

2. A composition of Claim 1 composed of 10 to 45 % by weight of glucose or 10 to 45 % by weight of glucose and 3 to 20 % by weight of more than one kind of other sugars or sugar alcohols, based on water.

3. A composition of Claim 1, wherein said sugars are glucose, sucrose, isomerized sugar, inverted sugar, fructose, thick malt syrup, maltose or lactose.

4. A composition of Claim 1, wherein said sugar alcohols are sorbitol, maltitol or reduced starch hydrolysate.

5. A composition of Claim 1, wherein a fruit juice, an acidulant, a flavoring, luxuries or a stabilizer are blended in said composition.

6. A composition of Claim 1, wherein high methoxylpectin is added and blended in order to be 0.1 to 2 % by weight.

7. A composition of Claim 1, wherein carbon dioxide gas is dissolved under an elevated pressure so that the gas pressure at 15°C is 0.2 to 0.9 $kg/cm^2$.

8. A composition of Claim 1, wherein the composition is frozen at -5 to -25°C.

9. A half-frozen beverage prepared by adding an aqueous liquid to a frozen composition composed of 10 to 65 % by weight based on water of one or more sugars and/or sugar alcohols.

10. A half-frozen beverage of Claim 9, wherein said composition is composed of 10 to 45 % by weight of glucose or 10 to 45 % by weight of glucose and 3 to 20 % by weight of more than one kind of other sugars or sugar alcohols, based on water.

11. A half-frozen beverage of Claim 9, wherein a fruit juice, an acidulant, a flavoring, luxuries or a stabilizer are blended in said composition.

12. A half-frozen beverage of Claim 9, wherein

0127686

said sugars are glucose, isomerized sugar, inverted sugar, fructose, thick malt syrup, maltose or lactose.

13. A half-frozen beverage of Claim 9, wherein said sugar alcohols are solbitol, maltitol or reduced starch hydrolysate.

14. A half-frozen beverage of Claim 9, wherein high methoxylpectin is added and blended in order to be 0.1 to 2 % by weight.

15. A half-frozen beverage of Claim 9, wherein carbon dioxide gas is dissolved under an elevated pressure so that the gas pressure at $15^{\circ}C$ is 0.2 to 0.9 $kg/cm^2$.

16. A half-frozen beverage of Claim 9, wherein said aqueous liquid is milk, soya milk, carbonated water or water.

17. A process for preparing a half-frozen beverage prepared by adding an aqueous liquid to a frozen composition composed of 10 to 65 % by weight based on water of one or more sugars and/or sugar alcohols, which comprises the first process in which a composition composed of 10 to 65 % by weight based on water of one or more sugars and/or sugar alcohols is prepared, the second process in which the prepared composition is injected into a package, sealed hermetically and pasteurized by heating, the third process in which the package containing the heat-pasteurized composition is frozen for more than 2 hours at -5 to $-25^{\circ}C$ and the fourth process in which the frozen composition in the package is blended with an aqueous liquid.

18. A process of Claim 17, wherein a fruit juice, an acidulant, a flavoring, luxuries or a stabilizer are blended in said composition.

19. A process of Claim 17, wherein said composition is composed of 10 to 45 % by weight of glucose or 10 to 45 % by weight of glucose and 3 to 20 % by weight of more than one kind of other sugars or sugar alcohols, based on water.

20. A process of Claim 17, wherein said sugars

- 26 -

are glucose, sucrose, isomerized sugar, inverted sugar, fructose, thick malt syrup, maltose or lactose.

21. A process of Claim 16, wherein said sugar alcohols are sorbitol, maltitol or reduced strach hydrolysate.

22. A process of Claim 17, wherein said aqueous liquid is milk, soya milk, carbonated water or water.

# INTERNATIONAL SEARCH REPORT

0127686

International Application No. PCT/JP83/00429

## I. CLASSIFICATION OF SUBJECT MATTER (if several classification symbols apply, indicate all) [3]

According to International Patent Classification (IPC) or to both National Classification and IPC

Int Cl[3]  A23G9/02, A23G9/04, A23G9/20

## II. FIELDS SEARCHED

### Minimum Documentation Searched [4]

| Classification System | Classification Symbols |
|---|---|
| IPC | A23G9/00, A23G9/02, A23G9/04, A23G9/20 |

### Documentation Searched other than Minimum Documentation to the Extent that such Documents are Included in the Fields Searched [5]

| | |
|---|---|
| | |

## III. DOCUMENTS CONSIDERED TO BE RELEVANT [14]

| Category* | Citation of Document, [16] with indication, where appropriate, of the relevant passages [17] | Relevant to Claim No. [18] |
|---|---|---|
| Y | Patent Laid-Open No. 122771/1979 | 1 - 22 |
| Y | Patent Laid-Open No. 15864/1977 | 1 - 22 |
| X | Patent Laid-Open No. 23850/1981 | 1 - 22 |
| Y | Patent Laid-Open No. 6788/1973 | 1 - 22 |

* Special categories of cited documents: [15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search [2] | Date of Mailing of this International Search Report [2] |
|---|---|
| February 23, 1984 (23. 02. 84) | March 12, 1984 (12. 03. 84) |

| International Searching Authority [1] | Signature of Authorized Officer [20] |
|---|---|
| Japanese Patent Office | |

Form PCT/ISA/210 (second sheet) (October 1981)